# FASCICULE DE BREVET EUROPEEN

(11) **EP 1 223 807 B1**
(45) Date de publication et mention de la délivrance du brevet: **10.12.2003**
(21) Numéro de dépôt: 00971507.9
(22) Date de dépôt: 26.10.2000
(51) Int. Cl.: A01N 25/30, C11D 1/825

(54) **COMPOSITIONS PESTICIDES ET/OU REGULATRICES DE CROISSANCE A AGENT TENSIO-ACTIF NON IONIQUE PARTICULIER**
PESTIZIDE UND/ODER PFLANZENWUCHSREGULIERENDE ZUSAMMENSETZUNGEN MIT NICHTIONISCHER TENSIDE
PESTICIDE AND/OR GROWTH REGULATING COMPOSITIONS WITH PARTICULAR NON-IONIC SURFACTANT

(30) Priorité: 29.10.1999 FR 9913842
(43) Date de publication de la demande: 24.07.2002
(73) Titulaire: Bayer CropScience S.A., 69009 Lyon (FR)
(72) Inventeur: FARRE, François, F-69480 Lucenay (FR); SEGAUD, Christian, F-69370 Saint Didier au Mont d'Or (FR); ZERROUK, Robert, F-06330 Roquefort-Les-Pins (FR)
(74) Mandataire: Mérigeault, Shona
(86) Numéro de dépôt international: FR0002977
(87) Numéro de publication internationale: WO01030147

(56) Documents cités:
- EP-A- 0 005 850
- EP-A- 0 513 902
- EP-A- 0 681 865
- EP-A- 0 916 717
- WO-A-92/02233
- WO-A-96/19555
- FR-A- 2 588 724
- US-A- 3 442 818

## Description

La présente invention concerne de nouvelles compositions pesticides et/ou régulatrices de croissance des plantes et/ou des insectes et/ou animaux nuisibles mettant en oeuvre un agent tensio-actif non ionique particulier, les dites compositions sont, notamment, utiles dans les domaines de l'agriculture et/ou de l'hygiène publique ou domestique par le biais de procédés de traitement ou de protection ; le dit agent tensio-actif en tant que tel faisant également partie de la présente invention; de même que les dits procédés de traitement ou de protection.

On connaît de très nombreuses substances ou matières actives pesticides et/ou régulatrices de croissance des plantes et /ou des insectes et/ou animaux nuisibles, notamment utiles dans les domaines de l'agriculture et/ou de l'hygiène publique ou domestique, par exemple par les brevets ou demandes de brevets EP-418 016, US-5 304 566, US-3 716 600, WO/05050, EP-201 852, US-3 845 172, etc.

Toutefois, la plupart du temps, les dites matières actives ne peuvent être mises en oeuvre seules ou pures, notamment pour des raisons évidentes de concentration, de facilité de manipulation ou de manutention ou encore de contraintes d'application.

Les dites matières actives sont donc, le plus souvent, associées ou mélangées à d'autres substances pour former des formulations ou des compositions, c'est-à-dire qu'elles se voient généralement adjoindre divers composés comme par exemple des supports de charge, des agents stabilisants, des agents émulsionnants ou encore des agents tensio-actifs ou d'autres adjuvants ou additifs.

Dans ce type de formulations ou de compositions, les dits agents tensio-actifs sont généralement choisis pour leurs propriétés émulsifiantes et/ou dispersantes et/ou stabilisantes, par exemple pour permettre une tenue au stockage améliorée. Ainsi, le brevet US 3,442,818 et la demande de brevet internationale WO 92/02233 décrivent l'utilisation d'agents tensio-actifs pour leurs propriétés émulsifiantes.

Un domaine, dans lequel les dits agents tensio-actifs peuvent jouer un rôle prépondérant lorsque mis en oeuvre dans des compositions, est celui de l'application, notamment par pulvérisation, de ces compositions. Par exemple, la demande de brevet FR 2588724 décrit l'utilisation d'agents tensio-actifs comme adjuvant dans une composition fongicide à base de diniconazole afin d'en améliorer les performances.

Néanmoins et malgré l'usage d'agents tensio-actifs, l'application des dites compositions se heurtent le plus souvent au problème du caractère plus ou moins mouillant de la composition à appliquer.

De même, un autre problème fréquemment rencontré lors de l'application de compositions, par exemple par pulvérisation, est la tendance des gouttelettes des dites compositions appliquées à rebondir ou à ricocher sur la surface d'application, et d'ainsi conduire à un gaspillage de composition ainsi qu'à une dispersion de composition dans l'environnement, dispersion à éviter pour des raisons écologiques aisément compréhensibles, de même que pour des raisons économiques tout aussi compréhensibles.

Ainsi, un objet de la présente invention est de fournir des compositions qui mettent en oeuvre une ou plusieurs matières actives pesticides et/ou régulatrices de croissance des plantes et/ou des insectes et/ou animaux nuisibles et possédant un caractère mouillant élevé.

Un autre objet de la présente invention est de fournir des compositions qui mettent en oeuvre une ou plusieurs matières actives pesticides et/ou régulatrices de croissance et qui permettent une application, notamment par pulvérisation, des plus efficaces.

Un objet complémentaire de la présente invention est de fournir des compositions utiles dans les domaines de l'agriculture et/ou de l'hygiène publique ou domestique et qui possèdent une tension dynamique réduite, notion qui fera l'objet d'un développement ultérieur.

Un autre objet de la présente invention est de fournir des compositions utiles dans les domaines de l'agriculture et/ou de l'hygiène publique ou domestique et possédant une biodisponibilité, de la matière active pesticide et/ou régulatrice de croissance employée, substantiellement améliorée.

Un objet supplémentaire de la présente invention est de fournir des compositions pesticides et/ou régulatrices de croissance mettant en oeuvre un agent tensio-actif non ionique particulier, les dites compositions pouvant notamment montrer une bonne stabilité lors de longues périodes de stockage ou d'entreposage et, ainsi, permettre de garder une grande efficacité à la matière active mise en oeuvre.

Un autre objet de la présente invention est de fournir des méthodes de protection et/ou de traitement, notamment des cultures et/ou des semences, mettant en oeuvre les compositions selon l'invention.

Un objet complémentaire de la présente invention est de fournir de telles méthodes à performances améliorées et qui permettent une réduction de la quantité de matière active appliquée, atout particulièrement intéressant pour des raisons écologiques aisément compréhensibles.

Un autre objet de la présente invention est de fournir un agent tensio-actif non ionique particulier comprenant plusieurs composantes chimiques, le dit agent tensio-actif possédant une mouillabilité particulièrement avantageuse.

Un autre objet de la présente invention est de fournir un agent tensio-actif non ionique particulier qui présente une tension dynamique réduite.

Un objet complémentaire de la présente invention est de fournir un agent tensio-actif non-ionique particulier qui puisse, par exemple, être avantageusement mis en oeuvre en présence de substances ioniques, indifféremment anioniques ou cationiques.

Il a maintenant été trouvé que ces objectifs pouvaient être atteints en tout ou partie grâce aux différents aspects de la présente invention, notamment au moyen de compositions selon l'invention, ou au moyen d'un agent tensio-actif non ionique particulier selon l'invention ou encore par le biais de procédé de mise en oeuvre des dites compositions ou du dit agent tensio-actif; de même d'autres objets ou avantages de la présente invention pourront apparaître lors de la description détaillée, à venir des différents aspects de la dite invention.

Un aspect essentiel et tout particulièrement préféré de la présente invention concerne des compositions pesticides et/ou régulatrices de croissance des plantes et/ou des insectes et/ou animaux nuisibles, utiles, notamment, dans les domaines de l'agriculture et/ou de l'hygiène publique ou domestique, caractérisées en ce qu'elles comprennent
A) une ou plusieurs matières actives pesticides et/ou régulatrices de croissance des plantes et/ou des insectes et/ou animaux nuisibles, à l'exception du diniconazole ;
B) un agent tensio-actif non ionique particulier comprenant deux composantes chimiques différentes
   B₁) dont la masse moléculaire est comprise entre 200 et 3 000g/mol, de préférence comprise entre 300 et 1 000g/mol ;
   B₂) dont la tension dynamique, mesurée dans l'eau, à une concentration de 0,4g par litre et à une fréquence de 10Hz, est comprise entre 35 et 73mN/m ;
   B₃) et comprenant chacune
      B3(i) une partie hydrophobe choisie parmi les groupements alcools oxo en C13; alcool isodécylique-α-isodécyl-ω-hydroxy ; alcools linéaires en C12 - C14 ; alcools linéaires en C16 - C18 ; alcool laurylique ; alcool myristique ; do- et/ou tetradécanols ; distyrylphénol-di-(phényl-1-éthyl)-phénols ; nonylphénols ; diols acétylèniques, notamment le tetra-(méthyl-2,4,7,9)-déca-5-yne ; alcools tri-décyliques ; et dont la masse molaire est comprise entre 100 et 1 500g/mol, de préférence comprise entre 150 et 400g/mol ;
      B3(ii) une partie hydrophile choisie parmi un radical poly-(oxy1,2 éthane-di-yl) et/ou un radical poly-(oxy1,2 propane-di-yl), dont la masse molaire est comprise entre 80 et 2 000g/mol, de préférence comprise entre 100 et 900g/mol ; et telles que
   B₄) la différence des masses molaires des parties hydrophobes de ces deux composantes chimiques est inférieure à 140g/mol ; et que
   B₅) la différence des masses molaires des parties hydrophiles de ces deux composantes chimiques est inférieure à 360g/mol.

Préférentiellement, la ou les matières actives employées dans les compositions selon l'invention sont présentes en des quantités généralement comprises entre 0,0001 et 99%, de préférence entre 0,5 et 70% en poids des dites compositions.

D'autres formes avantageuses de compositions selon l'invention, sont les compositions sous forme diluée, préférentiellement, ces dites compositions diluées comprennent entre 0,0001 et 10% de matière active.

D'autres formes encore plus avantageuses de compositions selon l'invention, sont les compositions sous forme concentrée, préférentiellement, ces dites compositions concentrées comprennent entre 15 et 99% de matière active.

De manière particulièrement avantageuse, l'agent tensio-actif non ionique particulier mis en oeuvre dans les compositions selon l'invention, est présent en des quantités généralement comprises entre 1 et 99,9999%, de préférence entre 5 et 80% en poids des dites compositions.

Très avantageusement, les deux composantes chimiques que comprend l'agent tensio-actif non ionique particulier mis en oeuvre au sein des compositions selon l'invention, sont généralement présentes en des quantités respectives telles que le rapport molaire des dites quantités soit compris entre 1/99 et 99/1, de préférence entre 25/75 et 75/25.

Toutefois, on préfère le plus souvent un rapport molaire des dites quantités compris entre 40/60 et 60/40.

Pour l'ensemble du présent texte et hormis toute autre précision, les quantités des différents constituants mis en oeuvre sont exprimées en pourcentage en poids.

Pour une plus grande clarté du présent exposé, différents termes ou expressions employés vont maintenant être définis.

Ainsi, au sens du présent texte, on entend le plus souvent
- par agent ou composé tensio-actif, un composé, un mélange de composés, une association ou une combinaison de composés pouvant posséder des propriétés tensio-actives et/ou de mouillabilité utiles, notamment, pour modifier, diminuer, accroître ou contrôler la tension superficielle d'une composition selon l'invention, de même que pour modifier, diminuer, accroître ou contrôler le caractère mouillant d'une telle composition ;
- par tension superficielle ou tension superficielle statique d'une composition selon l'invention, la tension pouvant exister entre la surface liquide d'une telle composition et le gaz, le plus souvent de l'air, entourant et/ou surmontant la dite surface ; ainsi la surface du dit liquide agit comme si elle était une peau tendue ou comme si existait à l'interface liquide-gaz
ou liquide-solide une telle peau tendue ;
- par caractère mouillant ou propriété de mouillabilité, expressions employées de façon indifférente pour qualifier les compositions selon l'invention pour la suite du présent texte, la faculté d'une gouttelette de composition, déposée sur la surface d'un solide, de s'étaler plus ou moins selon que la dite composition mouille ou ne mouille pas le solide ;
- par tension dynamique ou tension superficielle dynamique, la faculté d'une composition liquide, notamment d'une composition selon l'invention associée à un support liquide, de permettre, notamment lors de la pulvérisation d'une telle composition liquide, la migration plus ou moins rapide de la dite composition selon l'invention à l'interface eau/air des gouttelettes formées ; la dite tension dynamique ou tension superficielle dynamique ayant de manière avantageuse une valeur faible, gage, notamment, de réduction des pertes de composition liquide appliquée, par exemple par pulvérisation, les dites pertes étant dues le plus souvent au rebond des gouttelettes sur la surface d'application ;
- par biodisponibilité de la matière active mise en oeuvre dans une composition selon l'invention, le caractère disponible de la dite matière active la rendant la plus efficace dans son rôle pesticide et/ou régulateur de croissance des plantes et/ou des insectes ou animaux nuisibles, ainsi pour une quantité fixée de matière active, l'activité biologique de cette dernière pourra très largement varier selon la dite biodisponibilité de cette matière active dans la composition mise en oeuvre.

D'une manière générale, les agents ou composés tensio-actifs sont des molécules chimiques dont la structure comporte, le plus souvent, deux parties aux propriétés antagonistes vis-à-vis du milieu environnant. Ainsi, les dites molécules comportent généralement une partie dite hydrophobe, car ayant peu d'affinité pour l'eau, et une partie dite hydrophile, ainsi qualifiée pour son affinité supérieure pour l'eau. La dite partie hydrophile pouvant quelquefois être porteuse d'une charge électrique, l'agent tensio-actif est alors souvent qualifié d'anionique ou de cationique et, le cas échéant d'agent tensio-actif non-ionique quand la dite partie hydrophile n'est porteuse d'aucun groupement chimique ionique.

De façon préférée et selon les besoins, la nature des maladies à traiter, des insectes et/ou animaux et/ou végétaux nuisibles, à combattre, détruire ou éradiquer, selon les degrés d'infestation de ces nuisibles, les conditions climatiques et/ou édaphiques, les compositions selon l'invention peuvent contenir plusieurs matières actives pesticides et/ou régulatrices de croissance des plantes et/ou des insectes et/ou des animaux nuisibles associées, notamment de type fongicide et/ou insecticide et/ou acaricide et/ou rodenticide et/ou nématocide et/ou répulsive d'insectes et/ou d'animaux nuisibles et/ou régulatrice de croissance des plantes et/ou des insectes, et/ou une ou plusieurs matières actives de type herbicide.

De manière générale, la ou les matières actives pesticides et/ou régulatrices de croissance que peuvent comprendre les compositions selon l'invention sont celles citées dans tout ouvrage phytosanitaire général, par exemple L'Index Phytosanitaire (publié par la Direction technique de l'Association de Coordination Technique Agricole ou A.C.T.A.) ou encore The Pesticide Manual (du British Crop Protection Council, édité par Clive Tomlin) ou bien encore The Electronic Pesticide Manual version 1.0 (du British Crop Protection Council, édité par Clive Tomlin).

Parmi les matières actives insecticides, acaricides, nématocides qui peuvent être employées seules ou en association avec d'autres matières actives, notamment pesticides, dans les compositions selon l'invention, on peut citer l'Abamectin ; l'Acephate; l'Acetamiprid ; l'acide oléique ; l'Acrinathrin ; l'Aldicarb ; l'Alanycarb; l'Allethrin [(1R)-isomères] ; l'α-Cypermethrin; l'Amitraz; l'Azadirachtin; l'Azamethiphos; l'Azinphosethyl; l'Azinphos-methyl ; le Bacillus thurigiensi ; le Bendiocarb; le Benfuracarb ; le Bensultap ; la Beta-cyfluthrin ; la Beta-cypermethrin ; la Bifenthrin ; la Bioallathrin ; la Bioallethrin (isomère S-cyclopentényl) ; la Bioresmethrin ; le Borax ; le Buprofezin ; le Butocarboxim ; le Butoxycarboxim ; le butoxyde de piperonyle ; le Cadusafos ; le Carbaryl ; le Carbofuran ; le Carbosulfan ; le Cartap ; le Cartap hydrochloride ; le Chlordane; le Chlorethoxyfos; le Chlorfenapyr; le Chlorfenvinphos ; le Chlorfluazuron; le Chlormephos; la Chloropicrin; le Chlorpyrifos; le Chlorpyrifos-methyl ; le chlorure mercureux ; le Coumaphos ; la Cryolite ; la Cryomazine; le Cyanophos; le cyanure de calcium ; le cyanure de sodium ; la Cycloprothrin ; la Cyfluthrin ; la Cyhalothrin ; la Cypermethrin ; la Cyphenothrin [(1R)-trans-isomers] ; le Dazomet ; le DDT ; la Deltamethrin ; le Demeton-S-methyl; le Diafenthiuron; le Diazinon; le dibromure d'éthylène ; le dichlorure d'éthylène ; le Dichlorvos ; le Dicrotophos ; le Difluebnzuron; le Dimethoate ; le Dimethylvinphos; le Diofenolan ; le Disulfoton ; le DNOC ; le DPX-JW062 and DP ; l'Empenthrin [(EZ)-(1R)-isomères] ; l'Endosulfan ; l'ENT 8184 ; l'EPN ; l'Esfenvalerate ; l'Ethiofencarb ; l'Ethion ; l'Ethiprole de nom chimique 5-amino-3-cyano-1-(2,6-dichloro-4-trifluorométhyl-phényl)-4-éthylsulfinylpyrazole ; l'Ethoprophos ; l'Etofenprox ; l'Etrimfos ; le Famphur ; le Fenitrothion ; le Fenobucarb ; le Fenoxycarb ; la Fenpropathrin ; le Fenthion ; le Fenvalerate ; le Fipronil ; le Flucycloxuron ; le Flucythrinate ; le Flufenoxuron ; le Flufenprox; la Flumethrin; le Fluofenprox ; le fluorure de sodium ; le fluorure de sulfuryle ; le Fonofos ; le Formetanate ; le Formetanate hydrochloride ; le Formothion; le Furathiocarb ; le Gamma-HCH ; le GY-81 ; le Halofenozide; le Heptachlor ; le Heptenophos ; le Hexaflumuron ; le hexafluorasilicate de sodium ; les huiles de goudron ; les huiles de pétrole ; le Hydramethylnon ; le cyanure d'hydrogène ; l'Hydroprene ; l'Imidacloprid ; l'Imiprothrin ; l'Isazofos; l'Isofenphos ; l'Isoprocarb; l'Isothiocyanal de méthyle ; l'Isoxathion ; la lambda-Cyhalothrin ; le laurate de pentachlorophényle ; le Lufenuron; le Malathion; le MB-599 ; le Mecarbam ; le Methacrifos ; le Methamidophos ; le Methidathion ; le Methiocarb ; le Methomyl ; le Methoprene ; le Methoxychlor ; le Metolcarb ; le Mevinphos ; la Milbemectin ; le Monocrotophos ; le Naled ; la nicotine ; le Nitenpyram ; la Nithiazine ; le Novaluron ; l'Omethoate ; l'Oxamyl ; l'Oxydemeton-methyl ; le Paecilomyces fumosoroseus ; le Parathion ; le Parathion-methyl ; le pentachlorophénol ; le pentachlorophénoxide de sodium ; la Permethrin ; la Phenothrin [(1R)-trans-isomer] ; le Phenthoate ; le Phorate ; le Phosalone ; le Phosmet ; le Phosphamidon ; la phosphine ; le phosphure d'aluminium ; le phosphure de magnesium ; le phosphure de zinc ; le Phoxim ; le Pirimicarb ; le Pirimiphos-ethyl ; le Pirimiphos-methyl ; le polysulfure de calcium ; la Prallethrin ; le Profenofos ; le Propaphos ; le Propetamphos ; le Propoxur ; le Prothiofos ; le Pyraclofos ; les Pyrethrins (chrysanthemates, pyrethrates, pyrethrum) ; la Pyretrozine; le Pyridaben ; le Pyridaphenthion ; le Pyrimidifen ; le Pyriproxyfen ; le Quinatphos ; le Resmethrin ; le RH-2485 ; la Rotenone ; le RU 15525 ; le Silafluofen ; le Sulcofuron-sodium ; le Sulfotep ; le sulfuramide ; le Sulprofos ; le Tafluvalinate ; le Tebufenozide ; le Tebupirimfos ; le Teflubenzuron ; la Tefluthrin ; le Temephos ; le Terbufos ; le Tetrachlorvinphos ; la Tetramethrin ; la Tetramethrin [(1R)-isomèrès) ; la Theta-cypermethrin ; le Thiocyclam ; le Thiocyclam hydrogen oxalate ; le Thiodicarb ; le Thiofanox ; le Thiometon ; la Tralomethrin ; la Transfluthrin; le Triazamate ; le Triazophos ; le Trichlorfon ; le Triflumuron ; le Trimethacarb ; le Vamidothion ; le XDE-105 ; le XMC ; le Xylylcarb ; la Zeta-cypermethrin ; le ZXI 8901 ; le composé dont le nom chimique est le 3-acetyl-5-amino-1-[2,6-dichloro-4-(trifluoromethyl)phenyl)-4-methylsulfinyl pyrazole.

Parmi les matières actives fongicides qui peuvent être employées seules ou en association avec d'autres matières actives, notamment pesticides, dans les compositions selon l'invention, on peut citer l'Azaconazole ; l'Azoxystrobine ; le Benalaxyl ; le Benomyl ; le Bromuconazole ; le Captafol ; le Captane ; le Chloroneb ; le Chlorotalonil ; le Cymoxanil ; le Cyproconazole ; le Difenoconazole ; le Dimethomorphe ; le Diniconazole ; le Dodemorphe ; la Dodine ; l'Epoxyconazole ; l'Etaconazole ; la Famoxadone de nom chimique 5-méthyl-5-(4-phénoxyphényl)-3-(phénylamino-2,4-oxazolidinedione) ; la Fenamidone dont le nom chimique est la 4-méthyl-2-méthylthio-4-phényl-1-phénylamino-2-Imidazoline-5-one et son énantiomère 4-S ; le Fenarimol ; le Fenbuconazole ; la Fenpropidine ; le Fenpropimorphe ; le Fluazinam ; le Flucaconazole ; le Fludioxonil ; le Flusilazole ; la Flusulfamide ; le Flutolanil ; le Flutriafol ; le Flusilazole ; le Folpel ; le Fosetyl-Al ; ses sels ainsi que l'acide phosphoreux et ses sels ; la Guazatine ; l'Hexaconazole ; l'Ipconazole ; l'Iprodione ; l'Iprovalicarb ; le Kresoxim-Methyl ; le Mancozèbe ; le Manèbe ; la Mepanipyrime ; le Metalaxyl ; le Metalaxyl-M ; le Metconazole ; le Metirame ; le Metirame-zinc ; l'Oxadixyl ; le Penconazole ; le Pencycuron ; le Prochloraz ; la Procymidone ; le Propamocarbe ; le Propiconazole ; le Pyrimethanyl ; le Quinoxyfène ; le Tebuconazole ; le Tetraconazole ; le Thiram ; le Triadimefon ; le Triadimenol ; le Tricyclazole ; le Tridemorphe ; la Trifloxystrobine ; le Triticonazole ; le Zinèbe et le Ziram ; les composés de nom chimique (E,E)-2-(2-(1-(1-(2-pyridyl)propyloxyimino)-1-cyclopropylméthyloxyméthyl)-phényl)-3-éthoxy-propénoate de méthyle et le 3-(3,5-dichlorophenyl) 4-chloro pyrazole.

Parmi les matières actives herbicides qui peuvent être employées seules ou en association avec d'autres matières actives, notamment pesticides, dans les compositions selon l'invention, on peut citer l'Acetochlor ; l'Aclonifen ; l'Acifluorfen ; l'Alachlor ; l'Asulam ; l'Atrazine ; la Benfluraline ; le Bifenox ; le Bromoxynil ; le Carbetamide ; le Chlortoluron ; le Cinosulfuron ; le Clodinafop ; le Diflufenican ; le Dimefuron ; le Dinoterb ; le Florasulam ; le Fluazolate ; la Flucarbazone ; le Flufenacet le Flupyrsulfuron la Flurtamone ; le Glufosinate ; le Glyphosate ; l'Imazamox ; l'Imazaquine ; l'Imazethapyr ; l'Iodosulfuron ; l'Ioxynil ; l'Isoproturon ; l'Isoxachlortole ; l'Isoxaflutole ; le MCPA ; le Metobromuron ; le Metolachlor ; le Metosulam ; l'Oxadiargyl ; l'Oxadiazon ; le Paraquat ; la Pendimethaline ; la Phosphonothrixine ; le Pretilachlor ; le Primisulfuron ; le Propaquizafop ; la Propazine ; le Pyribenzoxime ; le Pyridafol ; les Quizalofop ; la Sulfentrazone ; le Thenylchlor ; le Thiazopyr ; la Trifluraline.

Dans les compositions selon l'invention, la ou les matières actives peuvent se présenter sous différentes formes physiques, notamment sous forme solide, ainsi que sous forme liquide ou semi-liquide.

Outre la ou les matières actives et l'agent tensio-actif non ionique particulier tels que précédemment décrits, les compositions selon l'invention peuvent comprendre un support, minéral ou organique, de manière préférée, ce support est sous forme liquide.

Toutefois, des supports solides peuvent avantageusement être mis en oeuvre en combinaison ou en association avec les compositions selon l'invention ; parmi ces dits supports solides on peut particulièrement citer les argiles ; les silicates naturels ou synthétiques ; les silices ; les résines ; les cires ; les engrais solides.

Pour l'exposé de la présente invention, on entend par support liquide, minéral ou organique, aussi bien un solvant employé seul qu'une association de plusieurs solvants. Une telle association étant alors constituée d'un solvant et d'un ou plusieurs co-solvants miscibles ou non l'un à l'autre.

Comme solvants mis en oeuvre dans les compositions selon l'invention, on peut avantageusement employer de l'eau et/ou des solvants organiques.

Il est à noter que les compositions selon l'invention qui font usage d'eau à titre de support liquide présentent l'avantage de réduire, de manière substantielle, les contraintes de toxicité et/ou d'inflammabilité que peuvent quelquefois comporter des compositions faisant usage de supports liquides organiques.

Toutefois et selon les qualités recherchées pour les compositions selon l'invention, ces dernières peuvent avantageusement faire usage de solvants organiques, ainsi les dits solvants organiques éventuellement employés pour les compositions selon l'invention peuvent être des solvants organiques protiques ou aprotiques parmi lesquels on peut mentionner les cétones ; par exemple l'isobutylcétone ou la cyclohexanone ; les amides telles la diméthylformamide ou la N,N-diméthylacétamine ; des solvants cycliques comme la N-méthyl-pyrrolidone, la N-octyl-pyrrolidone, la N-dodécyl-pyrrolidone, la N-octylcaprolactone, la N-dodécyl-caprolactone, la γ-butyrolactone ; ou encore d'autres solvants comme le diméthyl-sulfoxyde; ou des hydrocarbures aromatiques tel le xylène ; ou encore des esters comme l'acétate de propylèneglycolmonométhyléther, le dibutyl-adipate, l'acétate d'hexyle, l'acétate d'heptyle, le tri-n-butyl-citrate, le diéthylphtalate, les diesters méthyliques d'acide gras, notamment adipique ou succinique ; ou encore des alcools dont l'éthanol, le n-propanol, l'isopropanol, le n-butanol, l'isobutanol, l'alcool n-amylique, l'alcool isoamylique, l'alcool benzylique ou bien encore le 1-méthoxy-2-propanol, etc.

Pour les compositions selon l'invention en faisant usage, la quantité de solvant peut varier de 0,1 à 99,5%, de préférence de 15 à 80%, en poids des dites compositions.

Pour les compositions selon l'invention qui mettent en oeuvre un solvant et un ou plusieurs co-solvants, les quantités relatives de ces dits solvants et co-solvants varient dans des proportions du rapport solvant/co-solvant allant de 99/1 à 50/50.

Avantageusement, les compositions selon l'invention peuvent prendre des formes assez nombreuses et diverses, on peut notamment citer, comme formes liquides, les solutions concentrées ; les concentrés solubles ; les concentrés émulsionnables ; les émulsions concentrées ; les suspensions concentrées ; ou comme formes solides, les granulés ; les granulés dispersables ; les poudres ; les poudres mouillables.

En outre et selon les besoins ou la nature de la maladie à traiter, des végétaux, insectes et/ou animaux nuisibles à combattre, détruire ou éradiquer, ou selon les degrés d'infestation de ces nuisibles, ou encore selon les conditions climatiques et/ou édaphiques, les compositions selon l'invention peuvent contenir toutes autres substances habituelles pour la formulation de compositions utiles dans les domaines de l'agriculture et/ou de l'hygiène publique ou domestique.

Parmi ces composés, on peut citer, à titre d'exemples, les adjuvants, les agents anti-mottants, les agents colorants, les agents épaississants, les composés anti-mousse, les agents détergents tels les sels de métaux alcalino-terreux, les agents dispersants, les agents d'alcalinisation telles les bases, les agents d'adhésion, les agents émulsifiants, les agents stabilisants, les agents oxydants, tels les capteurs de radicaux libres ou les destructeurs catalytiques d'hydroperoxydes, ou bien les agents réducteurs, les agents anticorrosion, les agents antigel ou bien d'autres agents tensio-actifs ou encore toute autre substance spécifique à un emploi particulier des compositions selon l'invention, notamment les agents dispersants ou les agents de suspension.

Plus généralement, les compositions selon l'invention peuvent comprendre tous les additifs solides ou liquides correspondants aux techniques habituelles de la mise en formulation et acceptables, notamment, pour des usages dans les domaines de l'agriculture et/ou de l'hygiène publique ou domestique.

Ces additifs peuvent être présents, dans les compositions selon l'invention, en des quantités comprises entre 0 et 95% en poids des dites compositions.

Selon d'autres formes avantageuses de compositions selon l'invention, les différentes compositions selon l'invention qui viennent d'être décrites, peuvent également prendre la forme de mélanges extemporanés communément qualifiés de *tank-mix*.

Ces compositions selon l'invention sous forme de *tank-mix* sont habituellement sous forme de compositions insecticides diluées.

Le plus souvent, ces compositions selon l'invention dites *tank-mix* sont mélangées ou réalisées directement dans le réservoir du dispositif d'application.

Un aspect supplémentaire de la présente invention réside dans la mise en oeuvre des compositions pesticides et/ou régulatrices de croissance des végétaux et/ou insectes et/ou animaux nuisibles selon l'invention, telles que précédemment décrites et définies, dans des méthodes ou des procédés de traitement et/ou de protection, utiles notamment dans le domaine de l'agricutture, par exemple pour le traitement ou la protection des cultures et/ou dans le domaine de l'hygiène publique ou domestique.

Ainsi et notamment selon la ou les matières actives pesticides et/ou régulatrices de croissance mises en oeuvre, les dites compositions peuvent être employées pour protéger, traiter, combattre, détruire ou éradiquer maladies, champignons, végétaux, insectes ou animaux nuisibles.

Une caractéristique essentielle des dites méthodes de protection et/ou de traitement, notamment des cultures, est de mettre en oeuvre une quantité efficace et non-phytotoxique d'une composition selon l'invention.

Par l'expression quantité efficace et non phytotoxique, on entend une quantité de composition selon l'invention suffisante pour permettre de protéger, traiter, combattre, détruire ou éradiquer maladies, champignons, végétaux, insectes ou animaux nuisibles, présents ou susceptibles d'apparaître sur les cultures, et n'entraînant, pour lesdites cultures, aucun symptôme notable de phytotoxicité.

Une telle quantité est susceptible de varier dans de larges limites, notamment selon la maladie, les champignons, les végétaux, insectes ou animaux nuisibles à combattre, détruire ou éradiquer, selon le type de culture à traiter ou à protéger, ou encore selon les conditions climatiques ou édaphiques, ou bien encore selon la ou les matières actives présentes dans la composition selon l'invention utilisée.

Néanmoins, lorsque mises en oeuvre dans de telles méthodes de protection et/ou de traitement, les compositions selon l'invention sont, le plus souvent, appliquées, notamment par pulvérisation, en des quantités comprises entre 0,0001 et 20kg, de préférence entre 0,002 et 2kg, par hectare de culture à traiter et/ou à protéger.

Pour ce qui concerne les traitements de semences, les quantités de compositions selon l'invention mises en oeuvre sont habituellement comprises entre 0,01 et 250kg/T de semences ; l'homme de l'art saura adapter les dite proportions, notamment selon le type ou la taille des semences, ou encore selon le type de traitement ou de protection envisagés.

De manière avantageuse et pour ce qui concerne leur mise en oeuvre au sein des procédés selon l'invention qui viennent d'être décrits, les compositions selon l'invention peuvent faire l'objet d'assez nombreuses techniques d'application, notamment les dites compositions peuvent être appliquées par trempage, enduction ou recouvrement, ou par pulvérisation ou encore par brumisation, etc.

Pour ce qui concerne les différents modes d'application des compositions selon l'invention envisageables, on peut notamment citer des applications simultanées, séparées, alternées ou séquencées; les modes d'applications des procédés selon l'invention comprenant alors des étapes techniques de même nature que celles qui ont été précédemment décrites.

D'une manière générale, les méthodes ou procédés de protection et/ou de traitement des cultures selon l'invention qui mettent en oeuvre les compositions selon l'invention, le font par application, notamment par pulvérisation, sur les parties aériennes des dites cultures, les dites parties aériennes pouvant indifféremment être les feuilles ou les tiges.

Néanmoins, nombre d'autres techniques d'application peuvent être mises en oeuvre pour l'application des dites compositions selon l'invention; on pense notamment à la brumisation, mais également à l'application par trempage dans les dites compositions; ou encore par recouvrement ou par enduction au moyen d'une composition selon l'invention.

Du fait du très grand nombre de matières actives susceptibles d'être employées dans les compositions selon l'invention, ces dernières peuvent être, efficacement, mises en oeuvre dans des procédés de traitement ou de protection de nombreux types de cultures.

À titre d'exemples et de manière non limitative, de cultures pouvant être protégées et/ou traitées à l'aide des compositions selon l'invention, peuvent être mentionnés le riz, les céréales, notamment le blé, le maïs, le seigle, le triticale ou l'orge, les arbres fruitiers, la vigne, les cultures oléagineuses dont le colza, le tournesol, les pois, les cultures maraîchères, les solanées, notamment les pommes de terre, de même que le coton, le lin, les betteraves ainsi que les plantes ornementales et les arbres forestiers.

Les méthodes ou procédés de traitement et/ou de protection des produits de multiplication des végétaux, ainsi que des végétaux en résultant, contre les maladies, champignons, végétaux, insectes ou animaux nuisibles, font également partie de la présente invention, les dites méthodes étant, généralement, caractérisées en ce que l'on recouvre, en tout ou partie, les dits produits ou végétaux à traiter et/ou à protéger d'une dose efficace et non-phytotoxique d'une composition selon l'invention, ou tout autre matériel biologique de propagation.

Parmi les dits produits de multiplication des végétaux concernés, on peut, notamment, citer les semences, les graines, les tubercules ou les vitro-plants.

Les dites méthodes de traitement ou de protection de produits de multiplications des végétaux selon l'invention donnent des résultats particulièrement satisfaisants lorsqu'elles sont appliquées aux semences, notamment en ce qu'elles peuvent permettre une réduction substantielle de la quantité de matière active utilisée.

Une autre caractéristique des méthodes de traitement et/ou de protection selon l'invention est de pouvoir être mises en oeuvre dans le domaine de l'hygiène publique ou domestique, particulièrement par application d'une quantité efficace d'une composition pesticide et/ou régulatrice de croissance selon l'invention.

La dite application pouvant donner des résultats particulièrement satisfaisants lorsqu'elle met en oeuvre des quantités des dites compositions comprises entre 0,00001g et 500g, de préférence entre 0,001g et 200g, de composition selon l'invention pour 100m² de surface à traiter et/ou à protéger.

Il va sans dire que, même si les différents aspects de la présente invention ont pu, pour certains, être décrits par des caractéristiques particulières ou bien selon des formes avantageuses ou préférées, il est à noter que l'exposé des dits aspects par les dites caractéristiques particulières ou sous des formes avantageuses ou préférées, n'est donné qu'à titre d'exemple et que de nombreuses variations des détails des dits aspects de l'invention, notamment de préparation, d'usage ou encore de combinaison, sont envisageables sans se départir ni de l'esprit, ni de l'étendue de la dite invention.

Des exemples permettant une meilleure illustration des différents aspects de la présente invention vont faire l'objet de l'ultime développement de la présente description, les dits exemples ne sont en aucun cas à considérer comme limitatifs de l'étendue de la dite invention.

Les exemples 1a à 1f ont pour objectif de donner une illustration de différentes formes particulières de compositions pesticides selon l'invention, d'une part sous forme de compositions particulières selon l'invention qui sont sous forme liquide, et, d'autre part, de compositions particulières qui sont sous forme solide. Certaines de ces compositions particulières mettent en oeuvre des matières actives insecticides et d'autres, des matières actives herbicides, ou encore des matières actives fongicides.

### Exemple 1a :

Cet exemple se propose d'illustrer une composition insecticide selon l'invention sous la forme d'un concentré soluble.

Pour la préparation de cette composition insecticide particulière, on procède comme suit: dans 500ml de N,N-diméthyl-acétamide, on mélange 167g de produit commercialisé sous la marque *Rhodasurf 870* [poly(oxy -1,2-ethane-di-yl)-(alcool α-isodécyl-ω-hydroxy-isodécylique)] et 167g de produit commercialisé sous le nom *Rhodasurf LA30* [poly(oxy-1,2-ethane-di-yl)-(alcool linéaire en C₁₂-C₁₄ comme l'alcool laurylique, myristique- et do- et tetra-décanol)], puis on ajoute 167g d'un composé insecticide de nom chimique 5-amino-3-cyano-1-(2,6-dichloro-4-trifluoromethylphenyl)-4-ethylsulfinylpyrazole.

### Exemple 1b :

Cet exemple se propose d'illustrer une composition insecticide selon l'invention sous la forme d'une suspension concentrée.Lors d'une première étape et au moyen d'un disperseur approprié, on mélange, dans 400g d'eau, 8g d'un agent mouillant, sous la forme d'un alcool gras poly-éthoxylé, 15g d'un sel d'un phosphate de tri-styrylphénol poly-éthoxylé comme agent dispersant, avec 50g de propylène-glycol comme agent antigel et 1g d'un agent anti-mousse siliconé, 400g d'un composé insecticide de nom chimique 5-amino-3-cyano-1-(2,6-dichloro-4-trifluoromethylphenyl)-4-ethylsulfinylpyrazole.

Lors d'une deuxième étape, le mélange obtenu est broyé en vue d'en réduire la granulométrie à environ 2µm de diamètre moyen.

Enfin, lors d'une troisième étape, on ajoute 4g d'un agent anti-mousse siliconé, 60g d'un composé épaississant et biocide sous la forme d'une solution à 2% de xanthane et d'un agent biocide, et enfin 168g d'un agent tensio-actif non ionique selon l'invention comprenant de façon équimolaire les produits commercialisés sous les noms *Rhodasurf BO*/*327* [poly(oxy-1,2-ethane-di-yl)/poly(oxy-1,2-propane-di-yl)-(alcool linéaire C₁₂-C₁₄ C₁₂-C₁₄ comme l'alcool laurylique, myristique- et do- et tetra-décanol)] et *Rhodasurf 860*/*P* [poly(oxy -1,2-ethane-di-yl)-(alcool oxo en C₁₃ comme l'alcool α-isodécyl-ω-hydroxy-isodécylique)].

### Exemple 1c :

Cet exemple se propose d'illustrer une composition insecticide selon l'invention qui est colorée, notamment pour le traitement de semences, la dite composition est sous forme d'une suspension concentrée.

On procède comme pour l'exemple 1b en remplaçant le composé insecticide, par une quantité identique d'un autre composé insecticide de nom chimique 3-acetyl-5-amino-1-[2,6-dichloro-4-(trifluoromethyl)phenyl]-4-methylsulfinyl pyrazole, et en y ajoutant lors de la troisième étape 20g d'une poudre pigmentaire à base de Red 112.

### Exemple 1d :

Cet exemple se propose d'illustrer une composition fongicide liquide selon l'invention sous forme d'une suspension concentrée, colorée pour traitement de semences.

Lors d'une première étape, on mélange, dans 381,7g d'eau, 2g d'un agent mouillant, sous la forme d'un alcool gras polyéthoxylé, avec 70g d'un sel de phosphate de tristyrylphénol polyéthoxylé comme agent dispersant, avec 80g de propylène glycol comme agent antigel et 1g d'un agent anti-mousse siliconé, 45g d'un composé fongicide de nom chimique (E,E)-2-(2-(1-(1-(2-pyridyl)propyloxyimino)-1-cyclopropylméthyloxyméthyl)-phényl)-3-éthoxy-propénoate de méthyle.

Lors d'une deuxième étape, le mélange obtenu est broyé en vue d'en réduire la granulométrie à environ 2µm de diamètre moyen.

Enfin, lors d'une troisième étape, on ajoute 300g d'eau, 100g d'une poudre pigmentaire à base de Red 112, 4g d'un agent anti-mousse siliconé, 125g d'un composé épaississant et biocide sous la forme d'une solution à 2% de xanthane et d'un agent biocide, et enfin 40g d'un agent tensio-actif non ionique selon l'invention comprenant de façon équimolaire les produits commercialisés sous les noms *Rhodasurf 870* [poly(oxy -1,2-ethane-di-yl)-alcool oxo en C₁₃ et poly(oxy -1,2-ethane-di-yl)-alcool α-isodécyl-ω-hydroxy-isodécylique] et *Rhodasurf 860*/*P* [poly(oxy -1,2-ethane-di-yl)-(alcool oxo en C₁₃ et alcool α-isodécyl-ω-hydroxy-isodécylique)].

### Exemple 1e :

Cet exemple se propose d'illustrer une composition fongicide, liquide, colorée selon l'invention qui est sous forme d'un concentré soluble pour traitement de semences.

Dans 175g d'eau, on mélange 300g de Guazatine, composé fongicide connu en tant qu tel et défini comme un mélange des produits de réactions du carbamonitrile et de polyamines comprenant principalement l'octamethylenediamine, l'iminodi(octamethylenediamine) et l'octamethylenebis(imino-octamethylene)diamine, 300g de propylèneglycol comme agent antigel, 60g de poudre pigmentaire à base de Red 112, 1g d'un agent anti-mousse siliconé et 40g d'agent tensio-actif selon l'invention, comprenant de façon équimolaire du produit *Rhodasurf 860*/*P* [poly(oxy -1,2-ethane-di-yl)-(alcool oxo en C₁₃ et alcool α-isodécyl-ω-hydroxy-isodécylique)] et du produit *Rhodasurf* 870 [poly(oxy -1,2-ethane-di-yl)-(alcool oxo en C₁₃ comme l'alcool α-isodécyl-ω-hydroxy-isodécylique)].

### Exemple 1f :

Cet exemple se propose d'illustrer une composition insecticide selon l'invention solide et qui est sous la forme d'une poudre soluble.

A 350g de silice de précipitation sur laquelle on a préalablement adsorbé 350g d'agent tensio-actif selon l'invention sous la forme de 200g de produit *Rhodasurf 870* [poly(oxy -1,2-ethane-di-yl)-(alcool oxo en C₁₃ et alcool α-isodécyl-ω-hydroxy-isodécylique)] et de 150g de produit *Rhodasurf LA30* [poly(oxy -1,2-ethane-di-yl)-(alcool linéaire en C₁₂-C₁₄ et alcool laurylique et myristique-do- et tetra-décanol)], on ajoute, en mélangeant, 100g de ligno-sulfonate de sodium comme support solide et 200g de Fipronil, composé insecticide de nom chimique 5-amino-3-cyano-1-(2,6-dichloro-4-trifluoromethylphenyl)-4-trifluoromethylsulfinylpyrazole.

Les exemples 2a à 2i qui vont suivre ont pour objectif de donner une illustration de différents procédés particuliers de traitement ou de protection selon l'invention, au moyen de compostions pesticides selon l'invention.

### Exemple 2a :

Cet exemple se propose d'illustrer un procédé particulier d'application par pulvérisation foliaire d'une composition insecticide selon l'invention.

Cet exemple permet également une parfaite illustration de la capacité des compositions pesticides selon l'invention de permettre un mouillage efficace et avantageux des feuilles des plantes traitées.

Ce caractère mouillant des dites compositions est évalué par des mesures d'angles de contact.

L'angle de contact, exprimé en degré, est une caractéristique intensive d'un liquide qui permet, notamment, de mesurer le caractère mouillant du dit liquide appliqué sur une surface solide, particulièrement en ce que la valeur de cet angle de contact, mesurée pour une gouttelette du dit liquide, est d'autant plus faible que le liquide possède un pouvoir mouillant élevé. Les dites mesures peuvent être réalisées au moyen de tout appareillage connu pour de tels usages et dans des conditions que l'homme de l'art saura aisément déterminer.

En vue de réaliser ces mesures d'angles de contact, on prépare une composition insecticide liquide selon l'invention en mélangeant 1g d'une composition solide selon l'exemple 1f à un litre d'eau.

De la même manière, on prépare une composition insecticide témoin ne contenant pas d'agent tensio-actif selon l'invention.

La mesure proprement dite des angles de contact est réalisée en déposant par pulvérisation une gouttelette de 2µl de composition liquide à caractériser sur une feuille de blé, de variété Scypion élevée en chambre climatique pendant 14 jours à 10°C, puis en mesurant l'angle de contact que fait la gouttelette avec la surface solide de la feuille.

La composition insecticide témoin possède un angle de contact mesuré à 102° tandis que la composition insecticide selon l'invention, et contenant l'agent tensio-actif non ionique particulier selon l'invention, possède un angle de contact de 50,3°, valeur témoignant de façon exemplaire du caractère mouillant particulièrement avantageux de la dite composition insecticide selon l'invention.

### Exemple 2b :

Cet exemple se propose d'illustrer un procédé particulier d'application par pulvérisation foliaire d'une composition herbicide selon l'invention, la dite composition herbicide selon l'invention étant préparée extemporanément.

Cet exemple permet également une parfaite illustration de la capacité de cette composition herbicide particulière selon l'invention de permettre un mouillage efficace et avantageux des feuilles des plantes traitées.

Lors d'une première étape, on prépare une composition herbicide, sous forme d'un concentré soluble, et connue en soi. Pour cela, on mélange dans 400g d'eau, 8g d'un agent mouillant sous la forme d'un alcool gras polyéthoxylé, 20g d'un sel d'un phosphate de tristyrylphénol polyéthoxylé comme agent dispersant, 50g de propylène glycol comme agent antigel, 1g d'un agent anti-mousse siliconé et 500g de Diflufenican, de nom chimique 2',4'-difluoro-2-(α,α,α-trifluoro-*m*-tolyloxy)-nicotinanilide, comme composé herbicide.

Une deuxième étape consiste à broyer le mélange obtenu précédemment afin d'en réduire la granulométrie afin d'obtenir un diamètre moyen des particules d'environ 2µm.

Enfin, lors d'une troisième étape on ajoute 4g d'un agent anti-mousse siliconé et 60g d'un composé épaississant et biocide sous la forme d'une solution à 2% de xanthane et d'un agent biocide.

Enfin et de manière extemporanée, on prépare une composition herbicide selon l'invention en mélangeant 1g de la composition ainsi obtenue à un litre d'eau et à 1g d'agent tensio-actif selon l'invention comprenant de façon équimolaire les produits commercialisés sous les noms *Rhodasurf 870* et *Rhodasurf 860*/*P* [poly(oxy -1,2-ethane-di-yl)-(alcool oxo en C₁₃ et alcool α-isodécyl-ω-hydroxy-isodécylique)].

Pour les mesures d'angles de contact, on procède comme pour l'exemple 2a en mesurant l'angle de contact de gouttelettes de la composition herbicide selon l'invention préparée extemporanément, et de gouttelettes d'une composition témoin ne comprenant pas d'agent tensio-actif non ionique particulier selon l'invention.

Les mesures d'angle de contact sont réalisées sur feuilles de gaillet gratteron également connu comme *Gallium aparine*.

La composition herbicide témoin possède un angle de contact mesuré à 93,5° tandis que la composition herbicide selon l'invention, et contenant l'agent tensio-actif non ionique particulier selon l'invention, possède un angle de contact de 48,3°, valeur témoignant de façon exemplaire du caractère mouillant particulièrement avantageux de la dite composition insecticide selon l'invention.

### Exemple 2c :

Cet exemple se propose d'illustrer un procédé particulier de traitement insecticide par pulvérisation foliaire d'une composition insecticide selon l'invention.

Cet exemple permet également une bonne illustration de l'efficacité biologique particulièrement satisfaisante d'une telle composition selon l'invention, notamment pour la lutte contre le nuisible *Rhopalosiphum padi*. Trois parcelles de 30m² sont préparées et ensemencées de blé de variété *Triticum aestivum*.

Par ailleurs, on prépare une composition insecticide selon l'invention en répétant l'exemple 1b et en utilisant la Cypermethrin comme matière active.

De la même manière, on prépare une composition insecticide témoin ne contenant pas d'agent tensio-actif non ionique particulier selon l'invention et comprenant de la Cypermethrin comme matière active.

21 jours après levée, on applique, par pulvérisation foliaire et à 10g de matière active par hectare, de la composition selon l'invention sur la parcelle n°1 ; de la composition témoin sur la parcelle n°2 ; la parcelle n°3 n'est pas traitée pour servir de référence.

On compte alors le nombre d'insectes *Rhopalosiphum padi* encore présents sur les feuilles de blé trois et huit jours après traitement, les résultats sont rassemblés dans le tableau 1 ci-dessous.

**Tableau 1**

| | Nombre d'insectes par feuille encore présents 3 jours après traitement | Nombre d'insectes par feuille encore présents 8 jours après traitement |
|---|---|---|
| Parcelle n°1 | 2,4 | 1,9 |
| Parcelle n°2 | 4,6 | 4,3 |
| Parcelle n°3 | 5,4 | 4,9 |

### Exemple 2d :

Cet exemple se propose d'illustrer un autre procédé particulier de traitement insecticide par pulvérisation foliaire d'une composition insecticide selon l'invention.

Cet exemple permet lui aussi une bonne illustration de l'efficacité biologique particulièrement satisfaisante d'une telle composition selon l'invention, notamment pour la lutte contre le nuisible *Rhopalosiphum padi*.

Pour cet exemple, on procède comme pour l'exemple 2c mais en utilisant une composition comprenant de l'Imidacloprid comme matière active insecticide plutôt que de la Cypermethrin.

Les résultats obtenus sont rassemblés dans le tableau 2 ci-dessous.

**Tableau 2**

| | Nombre d'insectes par feuille encore présents 3 jours après traitement | Nombre d'insectes par feuille encore présents 8 jours après traitement |
|---|---|---|
| Parcelle n°1 | 1,05 | 1,3 |
| Parcelle n°2 | 4,6 | 3,8 |
| Parcelle n°3 | 5,4 | 4,9 |

### Exemple 2e :

Cet exemple se propose d'illustrer un procédé particulier d'application par pulvérisation foliaire d'une composition insecticide selon l'invention.

Cet exemple permet également une parfaite illustration de la capacité de cette composition insecticide particulière selon l'invention de permettre un mouillage efficace et avantageux des feuilles des plantes traitées.

Pour la préparation de la composition insecticide particulière selon l'invention qui doit être pulvérisée, on mélange 1g de composition selon l'exemple 1f à un litre d'eau.

De la même manière, on prépare une composition insecticide témoin ne contenant pas d'agent tensio-actif non ionique particulier selon l'invention.

Les mesures d'angle de contact sont réalisées en reprenant les conditions de l'exemple 2a.

La composition insecticide témoin possède un angle de contact mesuré à 110° tandis que la composition insecticide comprenant de l'agent tensio-actif non ionique particulier selon l'invention, possède un angle de contact mesuré à 51°, valeur témoignant de façon exemplaire du caractère mouillant particulièrement avantageux de la dite composition insecticide selon l'invention.

### Exemple 2f :

Cet exemple se propose d'illustrer un procédé particulier d'application par pulvérisation foliaire d'une composition insecticide liquide selon l'invention.

Cet exemple donne une illustration de la capacité d'une composition insecticide selon l'invention à être avantageusement retenue à la surface de la feuille de la plante traitée après pulvérisation.

Pour la préparation de la composition insecticide liquide et colorée particulière selon l'invention qui doit être pulvérisée, on mélange dans un litre d'eau, 1g d'une composition selon l'exemple 1f en ajoutant un ingrédient colorant supplémentaire sous la forme de 0,5g de carmoisine, substance connue pour ses propriétés colorantes.

De la même manière, on prépare une composition insecticide, liquide et colorée, témoin ne contenant pas d'agent tensio-actif non ionique particulier selon l'invention.

Après pulvérisation, on évalue la quantité de composition insecticide selon l'invention et de composition insecticide témoin, qui est retenue sur les feuilles des plantes traitées. Pour cela, on procède par dosage colorimétrique et on mesure le volume de chaque composition présent par gramme de végétal traité puis analysé.

Ces mesures aboutissent aux résultats suivants : les plantes traitées au moyen de la composition insecticide selon l'invention retiennent 10,2µl de composition par gramme de végétal traité ; tandis que les plantes traitées au moyen de la composition insecticide témoin ne retiennent que 4,4µl de composition par gramme de végétal traité.

Ces résultats permettent donc une illustration de l'avantage à utiliser une telle composition insecticide selon l'invention pour permettre une rétention supérieure de la dite composition sur la surface de la feuille de végétal traité et d'ainsi permettre un rendement et une efficacité supérieurs de la matière active insecticide mise en oeuvre, de même qu'une réduction avantageuse de la quantité de composition perdue ou épandue inutilement dans l'environnement, notamment par rebond sur la surface de la feuille au moment de la pulvérisation.

### Exemple 2g :

Cet exemple se propose d'illustrer un procédé particulier d'application d'une composition insecticide selon l'invention pour le recouvrement de semences.

Cet exemple donne également une illustration de la capacité avantageuse d'une composition insecticide particulière selon l'invention de permettre un recouvrement très satisfaisant des dites semences. Pour cela, on utilise une composition insecticide selon l'exemple 1c et une composition insecticide témoin ne comprenant pas d'agent tensio-actif non ionique particulier selon l'invention.

Pour la préparation de la composition selon l'invention à appliquer, on mélange 31 ml d'une composition selon l'exemple 1c à 69ml d'eau.

De la même manière on mélange 31 ml d'une composition insecticide témoin ne contenant pas d'agent tensio-actif non ionique particulier selon l'invention, à 69ml d'eau.

Après préparation de ces deux compositions, ces dernières ont fait l'objet d'une comparaison de leur capacité à permettre un recouvrement efficace par application sur des semences de blé de variété Rubeins. Ainsi, on applique 8ml de chaque composition insecticide, à l'aide d'un bol HEGE, dispositif connu pour permettre le traitement de semences, sur deux lots de 1kg des dites semences. Les proportions ainsi mises en oeuvre correspondent à l'application de 2,51 de composition selon l'exemple 1c par tonne de semences à traiter ou à protéger. Après application sur les semences, la distribution statistique, de chacune de ces deux compositions insecticides à évaluer, est étudiée en suivant les recommandations de la norme CIPAC MT175 décrite dans l'ouvrage CIPAC Handbook, vol. F : Physico-chemical methods for technical and formulated pesticides, édité par W. Dobrat et A. Martijn.

La technique d'évaluation mise en oeuvre conduit à un coefficient de variation qui rend compte, pour chacune des deux compositions insecticides employées, de l'uniformité de la répartition sur les semences. Ainsi, plus ce coefficient est faible, meilleure est la répartition de la composition sur l'ensemble des semences traitées, permettant une plus grande efficacité de la quantité de matière active mise en oeuvre dans la composition utilisée.

Ainsi, pour ce qui concerne la composition insecticide selon l'invention, le dit coefficient de variation est de 30% alors qu'il est de 53% pour la composition insecticide témoin ne contenant pas d'agent tensio-actif non ionique particulier selon l'invention.

On mesure ainsi parfaitement la faculté que possède l'agent tensio-actif objet de l'invention de permettre un meilleur mouillage et un meilleur recouvrement des semences traitées.

### Exemple 2h :

Cet exemple se propose d'illustrer un procédé particulier d'application d'une composition fongicide selon l'invention pour le recouvrement de semences.

Cet exemple donne également une illustration de la capacité avantageuse d'une composition fongicide particulière selon l'invention de permettre un recouvrement très satisfaisant des dites semences. Pour cela, on utilise une composition fongicide selon l'exemple 1d et une composition fongicide témoin ne comprenant pas d'agent tensio-actif non ionique particulier selon l'invention.

Pour ce qui concerne les conditions d'application et de mesures, on procède comme pour l'exemple 2g.

On obtient les résultats suivants : avec la composition fongicide selon l'invention, le coefficient de variation est de 28% alors qu'il est de 50% pour la composition fongicide témoin ne contenant pas d'agent tensio-actif non ionique particulier selon l'invention.

Encore une fois, on mesure ainsi parfaitement la faculté que possède l'agent tensio-actif objet de l'invention de permettre un meilleur mouillage et un meilleur recouvrement des semences traitées, notamment de part l'uniformité de ce recouvrement.

### Exemple 2i :

Cet exemple se propose d'illustrer un autre procédé particulier d'application d'une composition fongicide selon l'invention pour le recouvrement de semences.

Cet exemple donne également une illustration de la capacité avantageuse d'une composition fongicide particulière selon l'invention de permettre un recouvrement très satisfaisant des dites semences. Pour cela, on utilise une composition fongicide selon l'exemple 1d et une composition fongicide témoin ne comprenant pas d'agent tensio-actif non ionique particulier selon l'invention.

Pour ce qui concerne les conditions d'application et de mesures, on procède comme pour l'exemple 2g.

On obtient les résultats suivants : avec la composition fongicide selon l'invention, le coefficient de variation est de 11 % alors qu'il est de 25% pour la composition fongicide témoin ne contenant pas d'agent tensio-actif non ionique particulier selon l'invention.

Encore une fois, on mesure ainsi parfaitement la faculté que possède l'agent tensio-actif objet de l'invention de permettre un meilleur mouillage et un meilleur recouvrement des semences traitées.

## Revendications

1. Compositions pesticides et/ou régulatrices de croissance des plantes et /ou des insectes et/ou animaux nuisibles **caractérisées en ce qu'**elles comprennent
A) une ou plusieurs matières actives pesticides et/ou régulatrices de croissance des plantes et/ou des insectes et/ou animaux nuisibles, à l'exception du diniconazole ;
B) un agent tensio-actif non ionique particulier comprenant deux composantes chimiques différentes
B₁) dont la masse moléculaire est comprise entre 200 et 3 000g/mol, de préférence comprise entre 300 et 1 000g/mol ;
B₂) dont la tension dynamique, mesurée dans l'eau, à une concentration de 0,4g par litre et à une fréquence de 10Hz, est comprise entre 35 et 73mN/m ;
B₃) et comprenant chacune
B₃(i) une partie hydrophobe choisie parmi les groupements alcools oxo en C13; alcool isodécylique-α-isodécyl-ω-hydroxy ; alcools linéaires en C12 - C14; alcools linéaires en C16 - C18 ; alcool laurylique ; alcool myristique ; do- et/ou tetra-décanols ; distyrylphénol-di-(phényl-1-éthyl)-phénols; nonylphénols ; diols acétylèniques, notamment le tetra-(méthyl-2,4,7,9)-déca-5-yne ; alcools tri-décyliques ; et dont la masse molaire est comprise entre 100 et 1 500g/mol, de préférence comprise entre 150 et 400g/mol ;
B3(ii) une partie hydrophile choisie parmi un radical poly-(oxy1,2 éthane-di-yl) et/ou un radical poly-(oxy1,2 propane-di-yl), dont la masse molaire est comprise entre 80 et 2 000g/mol, de préférence comprise entre 100 et 900g/mol ; et telles que
B₄) la différence des masses molaires des parties hydrophobes de ces deux composantes chimiques est inférieure à 140g/mol ; et que
B₅) la différence des masses molaires des parties hydrophiles de ces deux composantes chimiques est inférieure à 360g/mol.

2. Compositions pesticides et/ou régulatrices de croissance des plantes et /ou des insectes et/ou animaux nuisibles selon la revendication 1 **caractérisées en ce que** la ou les matières actives sont présentes en des quantités comprises entre 0,0001 et 99%, de préférence entre 0,5 et 70% en poids.

3. Compositions pesticides et/ou régulatrices de croissance des plantes et /ou des insectes et/ou animaux nuisibles selon l'une ou l'autre des revendications 1 et 2 **caractérisées en ce que** l'agent tensio-actif non ionique particulier est présent en des quantités comprises entre 1 et 99,9999%, de préférence entre 5 et 80% en poids.

4. Compositions pesticides et/ou régulatrices de croissance des plantes et /ou des insectes et/ou animaux nuisibles selon l'une ou l'autre des revendications 1 à 3 **caractérisées en ce que** les composantes chimiques sont présentes en des quantités respectives telles que le rapport molaire des dites quantités soit compris entre 1/99 et 99/1, de préférence entre 25/75 et 75/25, encore plus préférentiellement entre 40/60 et 60/40.

5. Compositions pesticides et/ou régulatrices de croissance des plantes et /ou des insectes et/ou animaux nuisibles selon l'une ou l'autre des revendications 1 à 4 **caractérisées en ce qu'**elles comprennent un support, minéral ou organique, de préférence, en des quantités comprises entre 0,1 à 99,5%, de préférence entre 15 et 80%, en poids.

6. Compositions pesticides et/ou régulatrices de croissance des plantes et /ou des insectes et/ou animaux nuisibles selon la revendication 5 **caractérisées en ce que** le support est sous forme liquide.

7. Compositions pesticides et/ou régulatrices de croissance des plantes et /ou des insectes et/ou animaux nuisibles selon l'une ou l'autre des revendications 5 et 6 **caractérisées en ce que** le support est l'eau.

8. Compositions pesticides et/ou régulatrices de croissance des plantes et /ou des insectes et/ou animaux nuisibles selon l'une ou l'autre des revendications 5 et 6 **caractérisées en ce que** le support est un solvant organique choisi parmi les cétones telles l'isobutylcétone ou la cyclohexanone; les amides telles la diméthylformamide ou la N,N-diméthylacétamine ; des solvants cycliques comme la N-méthyl-pyrrolidone, la N-octyl-pyrrolidone, la N-dodécyl-pyrrolidone, la N-octyl-caprolactone, la N-dodécyl-caprolactone, la γ-butyrolactone ; ou encore d'autres solvants comme le diméthyl-sulfoxyde ; ou des hydrocarbures aromatiques tel le xylène ; ou encore des esters comme l'acétate de propylèneglycolmonométhyléther, le dibutyl-adipate, l'acétate d'hexyle, l'acétate d'heptyle, le tri-n-butyl-citrate, le diéthyl-phtalate, les diesters méthyliques d'acide gras ; ou encore des alcools dont l'éthanol, le n-propanol, l'isopropanol, le n-butanol, l'isobutanol, l'alcool n-amylique, l'alcool isoamylique, l'alcool benzylique ou bien encore le 1-méthoxy-2-propanol.

9. Compositions pesticides et/ou régulatrices de croissance des plantes et /ou des insectes et/ou animaux nuisibles selon la revendication 5 **caractérisées en ce que** le support est sous forme solide.

10. Compositions pesticides et/ou régulatrices de croissance des plantes et /ou des insectes et/ou animaux nuisibles selon l'une ou l'autre des revendications 5 et 9 **caractérisées en ce que** le support est choisi parmi les argiles les silicates naturels ou synthétiques ; les silices ; les résines ; les cires ; les engrais solides.

11. Compositions pesticides et/ou régulatrices de croissance des plantes et /ou des insectes et/ou animaux nuisibles selon l'une ou l'autre des revendications 1 à 10 **caractérisées en ce qu'**elles sont sous forme diluée et/ou comprennent entre 0,0001 et 10% de matière active.

12. Compositions pesticides et/ou régulatrices de croissance des plantes et /ou des insectes et/ou animaux nuisibles selon l'une ou l'autre des revendications 1 à 11 **caractérisées en ce qu'**elles sont sous forme concentrée et/ou comprennent entre 55 et 99% de matière active.

13. Compositions pesticides et/ou régulatrices de croissance des plantes et /ou des insectes et/ou animaux nuisibles selon l'une ou l'autre des revendications 1 à 12 **caractérisées en ce qu'**elles comprennent un ou plusieurs additifs en des quantités comprises entre 0 et 60% en poids.

14. Compositions pesticides et/ou régulatrices de croissance des plantes et /ou des insectes et/ou animaux nuisibles selon la revendication 13 **caractérisées en ce que** les additifs sont choisis parmi les adjuvants ; les agents anti-mottants ; les agents colorants ; les agents épaississants ; les composés anti-mousse ; les agents détergents tels les sels de métaux alcalino-terreux; les agents dispersants ; les agents d'alcalinisation telles les bases; les agents d'adhésion; les agents émulsifiants; les agents stabilisants ; les agents oxydants tels les capteurs de radicaux libres ou les destructeurs catalytiques d'hydroperoxydes ; les agents réducteurs ; les agents anticorrosion ; les agents antigel; d'autres agents tensio-actifs ; les agents dispersants ; les agents de suspension.

15. Procédé de traitement et/ou de protection des cultures **caractérisé en ce qu'**il met en oeuvre une composition selon l'une ou l'autre des revendications 1 à 14.

16. Procédé de traitement et/ou de protection des cultures selon la revendication 15 **caractérisé en ce que** la composition est appliquée par trempage ou par enduction ou par recouvrement ou par pulvérisation ou par brumisation.

17. Procédé de traitement et/ou de protection des cultures selon l'une ou l'autre des revendications 15 et 16 **caractérisé en ce que** la composition est appliquée en des quantités comprises entre 0,0001 et 20kg, de préférence entre 0,002 et 2kg, par hectare.

18. Procédé de traitement et/ou de protection de semences selon l'une ou l'autre des revendications 15 et 16 **caractérisé en ce que** la composition est appliquée en des quantités comprises entre 0,01 et 250kg/T de semences.

19. Procédé de traitement et/ou de protection des cultures selon l'une ou l'autre des revendications 15 à 18 **caractérisé en ce que** la culture protégée et/ou traitée est choisie parmi le riz, les céréales, tel le blé, le maïs, le seigle, le triticale ou l'orge, les arbres fruitiers, la vigne, les cultures oléagineuses tel le colza, le tournesol, les pois, les cultures maraîchères, les solanées, telles les pommes de terre, le coton, le lin, les betteraves, les plantes ornementales, les arbres forestiers.

20. Procédé de traitement et/ou de protection des cultures selon l'une ou l'autre des revendications 15 à 19 **caractérisé en ce que** la culture protégée et/ou traitée est un produit de multiplication des végétaux concernés, tels les semences, les graines, les tubercules ou les vitro-plants.

21. Procédé de traitement ou de protection en hygiène publique ou domestique **caractérisé** en qu'il met en oeuvre une composition selon l'une ou l'autre des revendications 1 à 14.

22. Procédé de traitement ou de protection en hygiène publique ou domestique selon la revendication 21 **caractérisé** en que la quantité de composition mise en oeuvre est comprise entre 0,0001g et 500g, de préférence entre 0,001g et 200g, de composition pour 100m² de surface à traiter et/ou à protéger.

## Patentansprüche

1. Pestizidzusammensetzungen und/oder Wachstumsregulatorzusammensetzungen für Pflanzen und/oder Insekten und/oder Schädlinge, **dadurch gekennzeichnet, daß** sie folgendes enthalten:
A) einen oder mehrere Pestizidwirkstoffe und/oder Pflanzen- und/oder Insekten- und/oder Schädlingswachstumsregulatoren, mit Ausnahme von Diniconazol,
B) ein bestimmtes nichtionisches Tensid, mit zwei chemisch unterschiedlichen Komponenten:
B₁) mit einer Molmasse von 200 bis 3000 g/mol, vorzugsweise 300 bis 1000 g/mol,
B₂) mit einer bei einer Konzentration von 0,4 g pro Liter und einer Frequenz von 10 Hz in Wasser gemessenen Zugspannung von 35 bis 73 mN/m,
B₃) sowie jeweils mit
B₃(i) einem hydrophoben Teil aus den folgenden Gruppen: C13-Oxoalkohole, α-Isodecyl-ω-hydroxyisodecylalkohol, geradkettige C12 - C14-Alkohole, geradkettige C16 - C18-Alkohole, Laurylalkohol, Myristilalkohol, Do- und/oder Tetradecanole, Distyrylphenol-di-(phenyl-1-ethyl)phenole, Nonylphenole, Acetylendiole, insbesondere 2,4,7,9-Tetramethyldeca-5-in, Tridecylalkohole; mit einem Molekulargewicht von 100 bis 1500 g/mol, vorzugsweise 150 bis 400 g/mol;
B₃(ii) einem hydrophilen Teil aus der Gruppe Poly(oxy-1,2-ethandiyl)rest und/oder Poly-(oxy-1,2-propandiyl)rest, mit einem Molekulargewicht zwischen 80 und 2000 g/mol, vorzugsweise 100 bis 900 g/mol, so daß
B₄) der Unterschied bezüglich der Molekulargewicht der hydrophoben Teile dieser beiden chemischen Komponenten weniger als 140 g/mol und
B₅) der Unterschied der Molekulargewichte der hydrophilen Teile dieser beiden chemischen Komponenten weniger als 360 g/mol beträgt.

2. Pestizidzusammensetzungen und/oder Wachstumsregulatorzusammensetzungen für Pflanzen und/oder Insekten und/oder Schädlinge nach Anspruch 1, **dadurch gekennzeichnet, daß** der Wirkstoff bzw. die Wirkstoffe in einer Menge von 0,0001 bis 99 Gew.-%, vorzugsweise 0,5 bis 70 Gew.-%, vorliegen.

3. Pestizidzusammensetzungen und/oder Wachstumsregulatorzusammensetzungen für Pflanzen und/oder Insekten und/oder Schädlinge nach Anspruch 1 oder 2, **dadurch gekennzeichnet, daß** das bestimmte nichtionische Tensid in einer Menge von 1 bis 99,9999 Gew.-%, vorzugsweise 5 bis 80 Gew.-%, vorliegt.

4. Pestizidzusammensetzungen und/oder Wachstumsregulatorzusammensetzungen für Pflanzen und/oder Insekten und/oder Schädlinge nach einem der Ansprüche 1 bis 3, **dadurch gekennzeichnet, daß** die chemischen Komponenten jeweils in solch einer Menge vorliegen, daß das Molverhältnis dieser Mengen zwischen 1:99 und 99:1, vorzugsweise zwischen 25:75 und 75:25, stärker bevorzugt zwischen 40:60 und 60:40 liegt.

5. Pestizidzusammensetzungen und/oder Wachstumsregulatorzusammensetzungen für Pflanzen und/oder Insekten und/oder Schädlinge nach einem der Ansprüche 1 bis 4, **dadurch gekennzeichnet, daß** sie einen anorganischen oder organischen Träger vorzugsweise in einer Menge von 0,1 bis 99,5 Gew.-%, vorzugsweise von 15 bis 80 Gew.-%, enthalten.

6. Pestizidzusammensetzungen und/oder Wachstumsregulatorzusammensetzungen für Pflanzen und/oder Insekten und/oder Schädlinge nach Anspruch 5, **dadurch gekennzeichnet, daß** der Träger in Form einer Flüssigkeit vorliegt.

7. Pestizidzusammensetzungen und/oder Wachstumsregulatorzusammensetzungen für Pflanzen und/oder Insekten und/oder Schädlinge nach Anspruch 5 oder 6, **dadurch gekennzeichnet, daß** es sich bei dem Träger um Wasser handelt.

8. Pestizidzusammensetzungen und/oder Wachstumsregulatorzusammensetzungen für Pflanzen und/oder Insekten und/oder Schädlinge nach Anspruch 5 oder 6, **dadurch gekennzeichnet, daß** es sich bei dem Träger um ein organisches Lösungsmittel aus der folgenden Gruppe: Ketone wie Isobutylketon oder Cyclohexanon, Amide wie Dimethylformamid oder N,N-Dimethylacetamid, cyclische Lösungsmittel wie N-Methylpyrrolidon, N-Octylpyrrolidon, N-Dodecylpyrrolidon, N-Octylcaprolactam, N-Dodecylcaprolactam, γ-Butyrolactam oder auch andere Lösungsmittel wie Dimethylsulfoxid, aromatische Kohlenwasserstoffe wie Xylol, oder Ester wie Propylenglykolmonomethyletheracetat, Dibutyladipat, Hexylacetat, Heptylacetat, Tri(n-butyl)-citrat, Diethylphthalat, die Fettsäuremethylester oder Alkohole darunter Ethanol, n-Propanol, Isopropanol, n-Butanol, Isobutanol, n-Amylalkohol, Isoamylalkohol, Benzylalkohol oder auch 1-Methoxy-2-propanol handelt.

9. Pestizidzusammensetzungen und/oder Wachstumsregulatorzusammensetzungen für Pflanzen und/oder Insekten und/oder Schädlinge nach Anspruch 5, **dadurch gekennzeichnet, daß** der Träger in Form eines Feststoffs vorliegt.

10. Pestizidzusammensetzungen und/oder Wachstumsregulatorzusammensetzungen für Pflanzen und/oder Insekten und/oder Schädlinge nach Anspruch 5 und 9, **dadurch gekennzeichnet, daß** der Träger aus der Gruppe Tone, natürliche oder synthetische Silicate, Silika-Arten, Harze, Wachse und feste Dünger stammt.

11. Pestizidzusammensetzungen und/oder Wachstumsregulatorzusammensetzungen für Pflanzen und/oder Insekten und/oder Schädlinge nach einem der Ansprüche 1 bis 10, **dadurch gekennzeichnet, daß** sie in verdünnter Form vorliegen und/oder 0,0001 bis 10% Wirkstoff enthalten.

12. Pestizidzusammensetzungen und/oder Wachstumsregulatorzusammensetzungen für Pflanzen und/oder Insekten und/oder Schädlinge nach einem der Ansprüche 1 bis 11, **dadurch gekennzeichnet, daß** sie in konzentrierter Form vorliegen und/oder 55 bis 99% Wirkstoff enthalten.

13. Pestizidzusammensetzungen und/oder Wachstumsregulatorzusammensetzungen für Pflanzen und/oder Insekten und/oder Schädlinge nach einem der Ansprüche 1 bis 12, **dadurch gekennzeichnet, daß** sie einen oder mehrere Zusatzstoffe in einer Menge von 0 bis 60 Gew.-% enthalten.

14. Pestizidzusammensetzungen und/oder Wachstumsregulatorzusammensetzungen für Pflanzen und/oder Insekten und/oder Schädlinge nach Anspruch 13, **dadurch gekennzeichnet, daß** die Zusatzstoffe aus der Gruppe der Hilfsstoffe, Antibackmittel, Färbemittel, Verdickungsmittel, Entschäumer, Tenside, wie Erdalkalimetallsalze, Dispergiermittel, Alkanisierungsmittel wie Basen, Haftmittel, Emulgatoren, Stabilisatoren, Oxidationsmittel wie Radikalfänger oder katalytische Hydroperoxid-Vernichter, Reduktionsmittel, Antikorrosiva, Gefrierschutzmittel, weitere Tenside, Dispergiermittel und Suspendiermittel stammen.

15. Verfahren zur Behandlung und/oder zum Schutz von Kulturpflanzen, **dadurch gekennzeichnet, daß** man eine Zusammensetzung nach einem der Ansprüche 1 bis 14 verwendet.

16. Verfahren zur Behandlung und/oder zum Schutz von Kulturpflanzen nach Anspruch 15, **dadurch gekennzeichnet, daß** die Zusammensetzung durch Tauchen oder Bedecken oder Beschichten oder Spritzen oder Vernebeln ausgebracht wird.

17. Verfahren zur Behandlung und/oder zum Schutz von Kulturpflanzen nach Anspruch 15 oder 16, **dadurch gekennzeichnet, daß** die Zusammensetzung in einer Menge von 0,0001 bis 20 kg, vorzugsweise von 0,002 bis 2 kg pro Hektar ausgebracht wird.

18. Verfahren zur Behandlung und/oder zum Schutz von Samen nach Anspruch 15 oder 16, **dadurch gekennzeichnet, daß** die Zusammensetzung in einer Menge von 0,01 bis 250 kg pro Tonne Samen ausgebracht wird.

19. Verfahren zur Behandlung und/oder zum Schutz von Kulturpflanzen nach einem der Ansprüche 15 bis 18, **dadurch gekennzeichnet, daß** die geschützte und/oder behandelte Kulturpflanze aus der Reihe Reis, Getreide wie Weizen, Mais, Roggen, Triticale oder Gerste, Obstbäume, Weinrebe, Ölfrüchte wie Raps, Sonnenblume, Erbsen, gartenbauliche Kulturen, Solanaceen wie die Kartoffel, Baumwolle, Flachs, Rüben, Zierpflanzen und Waldbäume stammt.

20. Verfahren zur Behandlung und/oder zum Schutz von Kulturpflanzen nach einem der Ansprüche 15 bis 19, **dadurch gekennzeichnet, daß** es sich bei der geschützten und/oder behandelten Kulturpflanze um ein Vermehrungsprodukt der entsprechenden Pflanzen, wie Samen, Körner, Knöllchen oder in-vitro-Pflanzen handelt.

21. Verfahren zur Behandlung oder zum Schutz auf dem Gebiet der öffentlichen Hygiene oder Haushaltshygiene, **dadurch gekennzeichnet, daß** man eine Zusammensetzung nach einem der Ansprüche 1 bis 14 verwendet.

22. Verfahren zur Behandlung oder zum Schutz auf dem Gebiet der öffentlichen Hygiene oder Haushaltshygiene, nach Anspruch 21, **dadurch gekennzeichnet, daß** die verwendete Menge an Zusammensetzung 0,0001 g bis 500 g, vorzugsweise 0,001 g bis 200 g Zusammensetzung pro 100 m² zu behandelnde und/oder zu schützende Oberfläche beträgt.

## Claims

1. Pesticidal and/or growth regulating compositions for harmful plants and/or insects and/or animals, **characterized in that** they comprise
A) one or more pesticidal and/or growth-regulating active materials for harmful plants and/or insects and/or animals, with the exception of diniconazole;
B) a specific nonionic surface-active agent comprising two different chemical components
B₁) the molecular mass of which is between 200 and 3 000 g/mol, preferably between 300 and 1 000 g/mol;
B₂) the dynamic tension of which, measured in water at a concentration of 0.4 g per litre and at a frequency of 10 Hz, is between 35 and 73 mN/m;
B₃) and each comprising
B₃(i) a hydrophobic part chosen from the following groups: C₁₃ oxo alcohols; α-isodecyl-ω-hydroxyisodecyl alcohol; linear C₁₂-C₁₄ alcohols; linear C₁₆-C₁₈ alcohols; lauryl alcohol; myristyl alcohol; do- and/or tetradecanols; distyrylphenol-di(1-phenylethyl)phenols; nonylphenols; acetylenediols, in particular 2,4,7,9-tetramethyldeca-5-yne; tridecyl alcohols; and the molar mass of which is between 100 and 1 500 g/mol, preferably between 150 and 400 g/mol;
B3(ii) a hydrophilic part chosen from a poly(oxy-1,2-ethanediyl) radical and/or a poly(oxy-1,2-propanediyl) radical, the molar mass of which is between 80 and 2 000 g/mol, preferably between 100 and 900 g/mol; and such that
B₄) the difference in molar masses of the hydrophobic parts of these two chemical components is less than 140 g/mol; and that
B₅) the difference in molar masses of the hydrophilic parts of these two chemical components is less than 360 g/mol.

2. Pesticidal and/or growth regulating compositions for harmful plants and/or insects and/or animals according to Claim 1, **characterized in that** the active material or materials are present in amounts of between 0.0001 and 99%, preferably between 0.5 and 70%, by weight.

3. Pesticidal and/or growth regulating compositions for harmful plants and/or insects and/or animals according to either of Claims 1 and 2, **characterized in that** the specific nonionic surface-active agent is present in amounts of between 1 and 99.9999%, preferably between 5 and 80%, by weight.

4. Pesticidal and/or growth regulating compositions for harmful plants and/or insects and/or animals according to one or other of Claims 1 to 3, **characterized in that** the chemical components are present in respective amounts such that the molar ratio of the said amounts is between 1/99 and 99/1, preferably between 25/75 and 75/25, more preferably still between 40/60 and 60/40.

5. Pesticidal and/or growth regulating compositions for harmful plants and/or insects and/or animals according to one or other of Claims 1 to 4, **characterized in that** they comprise an inorganic or organic carrier, preferably, in amounts of between 0.1 to 99.5%, preferably between 15 and 80%, by weight.

6. Pesticidal and/or growth regulating compositions for harmful plants and/or insects and/or animals according to Claim 5, **characterized in that** the carrier is in the liquid form.

7. Pesticidal and/or growth regulating compositions for harmful plants and/or insects and/or animals according to either of Claims 5 and 6, **characterized in that** the carrier is water.

8. Pesticidal and/or growth regulating compositions for harmful plants and/or insects and/or animals according to either of Claims 5 and 6, **characterized in that** the carrier is an organic solvent chosen from ketones, such as isobutyl ketone or cyclohexanone; amides, such as dimethylformamide or N,N-dimethylacetamine; cyclic solvents, such as N-methylpyrrolidone, N-octylpyrrolidone, N-dodecyl-pyrrolidone, N-octylcaprolactam, N-dodecylcaprolactam or γ-butyrolactone; or other solvents, such as dimethyl sulphoxide; or aromatic hydrocarbons, such as xylene; or esters, such as propylene glycol monomethyl ether acetate, dibutyl adipate, hexyl acetate, heptyl acetate, tri(n-butyl) citrate, diethyl phthalate, or dimethyl esters of a fatty acid; or alcohols, including ethanol, n-propanol, isopropanol, n-butanol, isobutanol, n-amyl alcohol, isoamyl alcohol, benzyl alcohol or 1-methoxy-2-propanol.

9. Pesticidal and/or growth regulating compositions for harmful plants and/or insects and/or animals according to Claim 5, **characterized in that** the carrier is in the solid form.

10. Pesticidal and/or growth regulating compositions for harmful plants and/or insects and/or animals according to either of Claims 5 and 9, **characterized in that** the carrier is chosen from clays; natural or synthetic silicates; silicas; resins; waxes; or solid fertilizers.

11. Pesticidal and/or growth regulating compositions for harmful plants and/or insects and/or animals according to one or other of Claims 1 to 10, **characterized in that** they are in the dilute form and/or comprise between 0.0001 and 10% of active material.

12. Pesticidal and/or growth regulating compositions for harmful plants and/or insects and/or animals according to one or other of Claims 1 to 11, **characterized in that** they are in the concentrated form and/or comprise between 55 and 99% of active material.

13. Pesticidal and/or growth regulating compositions for harmful plants and/or insects and/or animals according to one or other of Claims 1 to 12, **characterized in that** they comprise one or more additives in amounts of between 0 and 60% by weight.

14. Pesticidal and/or growth regulating compositions for harmful plants and/or insects and/or animals according to Claim 13, **characterized in that** the additives are chosen from adjuvants; anticaking agents; colouring agents; thickening agents; antifoaming agents; detergent agents, such as salts of alkaline earth metals; dispersing agents; basifying agents such as bases; adhesion agents; emulsifying agents; stabilizing agents; oxidizing agents such as free radical scavengers or catalytic destroyers of hydroperoxides; reducing agents; corrosion inhibitors; antifreeze agents; other surface-active agents; dispersing agents; or suspending agents.

15. Process for the treatment and/or protection of crops, **characterized in that** it employs a composition according to one or other of Claims 1 to 14.

16. Process for the treatment and/or protection of crops according to Claim 15, **characterized in that** the composition is applied by dipping or by covering or by coating or by spraying or by fogging.

17. Process for the treatment and/or protection of crops according to either of Claims 15 and 16, **characterized in that** the composition is applied in amounts of between 0.0001 and 20 kg, preferably between 0.002 and 2 kg, per hectare.

18. Process for the treatment and/or protection of seeds according to either of Claims 15 and 16, **characterized in that** the composition is applied in amounts of between 0.01 and 250 kg/T of seeds.

19. Process for the treatment and/or protection of crops according to one or other of Claims 15 to 18, **characterized in that** the protected and/or treated crop is chosen from rice, cereals, such as wheat, maize, rye, triticale or barley, fruit trees, the vine, oleaginous crops, such as rape or sunflower, peas, market gardening crops, the Solanaceae, such as potatoes, cotton, flax, beetroot, ornamental plants or forest trees.

20. Process for the treatment and/or protection of crops according to one or other of Claims 15 to 19, **characterized in that** the protected and/or treated crop is a product for the propagation of the plants concerned, such as seeds, tubers or in-vitro plants.

21. Process for treatment or protection in public or domestic hygiene, **characterized in that** it employs a composition according to one or other of Claims 1 to 14.

22. Process for treatment or protection in public or domestic hygiene according to Claim 21, **characterized in that** the amount of composition employed is between 0.0001 g and 500 g, preferably between 0.001 g and 200 g, of composition per 100 m² of surface area to be treated and/or protected. 0.0001 g and 500 g.
